# EUROPEAN PATENT APPLICATION

(11) **EP 2 116 518 A1**
(43) Date of publication of application: **11.11.2009**
(21) Application number: 07859816.6
(22) Date of filing: 13.12.2007
(51) Int. Cl.: C03C 17/34, B32B 5/16, B32B 9/00, B60S 1/02, C09D 1/00, C09D 7/12, C09K 3/18

(54) **ARTICLES HAVING WATER-REPELLENT SURFACES**

(30) Priority: 15.12.2006 JP 2006338448
(71) Applicant: Asahi Glass Company, Limited, Chiyoda-ku Tokyo 100-8405 (JP)
(72) Inventor: KISHIKAWA, Noriko, Tokyo 100-8405 (JP); YONEDA, Takashige, Tokyo 100-8405 (JP)
(74) Representative: Müller-Boré & Partner Patentanwälte
(86) International application number: PCT/JP2007/074053
(87) International publication number: WO 2008/072707

(57) **Abstract**

To provide an article having a water-repellent surface, which has excellent water repellency and abrasion resistance.

An article having a water-repellent layer comprising the following inner layer and the following surface layer, on a surface of a substrate, and **characterized in that** the surface of the water-repellent layer has (a) a surface area ratio (S ratio) of from 1.01 to 1.40, (b) an average surface roughness (Ra) of from 3 to 80 nm, (c) a root-mean-square surface roughness (RMS) of from 3 to 90 nm, (d) an absolute value of the difference between the average surface roughness (Ra) and the root-mean-square surface roughness (RMS) of at most 20 nm and (e) a maximum peak-valley difference (P-V) of from 40 to 600 nm:

Inner layer: A layer which is formed by sintering a mixture of metal oxide spherical fine particles (A) having a mean primary particle size of from 1 to 60 nm and metal oxide spherical fine particles (B) having a mean primary particle size of from 50 to 300 nm, provided that the difference in the mean primary particle size between the metal oxide spherical fine particles (A) and the metal oxide spherical fine particles (B) is at least 20 nm and the proportion of the metal oxide spherical fine particles (A) to the total of the metal oxide spherical fine particles (A) and the metal oxide spherical fine particles (B) is more than 30 mass% and at most 60 mass%, and which has a thickness of at most 5 times the mean primary particle size of the metal oxide spherical fine particles (B),

Surface layer: A layer which comprises hydrophobized metal oxide fine particles (C) whose mean primary particle size is from 1 to 20 nm and a metal oxide binder, provided that the metal oxide binder is made of a binder material containing a metal compound (D) which becomes a metal oxide by a hydrolytic condensation reaction or thermal decomposition, and in which the hydrophobized metal oxide fine particles (C) adhere to the surface of the spherical fine particles present on the upper side of the inner layer.

## Description

### TECHNICAL FIELD

The present invention relates to an article having a water-repellent surface.

### BACKGROUND ART

When rainwater deposits on a window glass of a transport machine during raining, the driver's visibility tends to be poor, which may hinder the driving. Therefore, it has been attempted to impart water-repellency to the surface of a glass plate so that deposited rainwater may be readily removed. In recent years, various ultra-water-repellent substrates have been proposed to further increase water-repellency thereby to improve the visibility (e.g. Patent Documents 1 to 6). Such ultra-water-repellent substrates have a concave-convex structure on their surface to provide the ultra-water repellency.
Patent Document 1: WO2003/039855
Patent Document 2: WO2003/039856
Patent Document 3: WO2004/052639
Patent Document 4: WO2004/052640
Patent Document 5: JP-A-2005-169761
Patent Document 6: JP-A-2005-177697

### DISCLOSURE OF THE INVENTION

### PROBLEM TO BE SOLVED BY THE INVENTION

The ultra-water-repellent substrates disclosed in Patent Documents 1 to 6 are expected to be applied to e.g. window glass for buildings or window glass for transport machines (e.g. automobiles). However, if the ultra-water-repellent substrates are used for such applications, there is a problem such that the substrate surface is damaged when the surface is abraded by a wiper or contacted with ballistic fragments.

### MEANS TO SOLVE THE PROBLEM

The present invention has been made to solve the above problem and provides the following.
(1) An article having a water-repellent surface, which is an article having a water-repellent layer comprising the following inner layer and the following surface layer, on a surface of a substrate, and which is **characterized in that** the surface of the water-repellent layer has (a) a surface area ratio (S ratio) of from 1.01 to 1.40, (b) an average surface roughness (Ra) of from 3 to 80 nm, (c) a root-mean-square surface roughness (RMS) of from 3 to 90 nm, (d) an absolute value of the difference between the average surface roughness (Ra) and the root-mean-square surface roughness (RMS) of at most 20 nm and (e) a maximum peak-valley difference (P-V) of from 40 to 600 nm:
   Inner layer: A layer which is formed by sintering a mixture of metal oxide spherical fine particles (A) having a mean primary particle size of from 1 to 60 nm and metal oxide spherical fine particles (B) having a mean primary particle size of from 50 to 300 nm, provided that the difference in the mean primary particle size between the metal oxide spherical fine particles (A) and the metal oxide spherical fine particles (B) is at least 20 nm and the proportion of the metal oxide spherical fine particles (A) to the total of the metal oxide spherical fine particles (A) and the metal oxide spherical fine particles (B) is more than 30 mass% and at most 60 mass%, and which has a thickness of at most 5 times the mean primary particle size of the metal oxide spherical fine particles (B),
   Surface layer: A layer which comprises hydrophobized metal oxide fine particles (C) whose mean primary particle size is from 1 to 20 nm and a metal oxide binder, provided that the metal oxide binder is made of a binder material containing a metal compound (D) which becomes a metal oxide by a hydrolytic condensation reaction or thermal decomposition, and in which the hydrophobized metal oxide fine particles (C) adhere to the surface of the spherical fine particles present on the upper side of the inner layer.
(2) A process for producing an article having a water-repellent surface, characterized by forming a layer of a mixture comprising the following metal oxide spherical fine particles (A) and the following metal oxide spherical fine particles (B), on a surface of a substrate, then sintering these spherical fine particles to form the following inner layer having a concave-convex surface, then forming, on the surface of the inner layer, a coating film comprising the following hydrophobized metal oxide fine particles (C) and a binder material, followed by firing to form the following surface layer:
   Inner layer: A layer which is formed by sintering a mixture of metal oxide spherical fine particles (A) having a mean primary particle size of from 1 to 60 nm and metal oxide spherical fine particles (B) having a mean primary particle size of from 50 to 300 nm, provided that the difference in the mean primary particle size between the metal oxide spherical fine particles (A) and the metal oxide spherical fine particles (B) is at least 20 nm and the proportion of the metal oxide spherical fine particles (A) to the total of the metal oxide spherical fine particles (A) and the metal oxide spherical fine particles (B) is more than 30 mass% and at most 60 mass%, and which has a thickness of at most 5 times the mean primary particle size of the metal oxide spherical fine particles (B),
   Surface layer: A layer which comprises hydrophobized metal oxide fine particles (C) whose mean primary particle size is from 1 to 20 nm and a metal oxide binder, provided that the metal oxide binder is a component made of a binder material containing a metal compound (D) which becomes a metal oxide by a hydrolytic condensation reaction or thermal decomposition, and in which the hydrophobized metal oxide fine particles (C) adhere to the surface of the spherical fine particles present on the upper side of the inner layer.

### EFFECTS OF THE INVENTION

The article having a water-repellent surface of the present invention exhibits good water-repellency and is excellent in durability.

### BRIEF DESCRIPTION OF THE DRAWINGS

Fig. 1 is a photograph, as taken from the above, of the article having a water-repellent surface of the present invention.
Fig. 2 is a cross sectional photograph of the article having a water-repellent surface of the present invention.
Fig. 3 is a schematic cross sectional view illustrating an example of a method for evaluating removability of rainwater in the present invention.

### MEANINGS OF SYMBOLS

10: Transparent substrate
20: Dropping jig
30: Fixing table

### BEST MODE FOR CARRYING OUT THE INVENTION

The article having a water-repellent surface (which may be hereinafter simply referred to also as "the water-repellent article") of the present invention is an article having a water-repellent surface, which is an article having a water-repellent layer comprising the following inner layer and the following surface layer, on a surface of a substrate, and which is **characterized in that** the surface of the water-repellent layer has (a) a surface area ratio (S ratio) of from 1.01 to 1.40, (b) an average surface roughness (Ra) of from 3 to 80 nm, (c) a root-mean-square surface roughness (RMS) of from 3 to 90 nm, (d) an absolute value of the difference between the average surface roughness (Ra) and the root-mean-square surface roughness (RMS) of at most 20 nm and (e) a maximum peak-valley difference (P-V) of from 40 to 600 nm:

Inner layer: A layer which is formed by sintering a mixture of metal oxide spherical fine particles (A) having a mean primary particle size of from 1 to 60 nm and metal oxide spherical fine particles (B) having a mean primary particle size of from 50 to 300 nm, provided that the difference in the mean primary particle size between the metal oxide spherical fine particles (A) and the metal oxide spherical fine particles (B) is at least 20 nm and the proportion of the metal oxide spherical fine particles (A) to the total of the metal oxide spherical fine particles (A) and the metal oxide spherical fine particles (B) is more than 30 mass% and at most 60 mass%, and which has a thickness of at most 5 times the mean primary particle size of the metal oxide spherical fine particles (B),

Surface layer: A layer which comprises hydrophobized metal oxide fine particles (C) whose mean primary particle size is from 1 to 20 nm and a metal oxide binder, provided that the metal oxide binder is a component made of a binder material containing a metal compound (D) which becomes a metal oxide by a hydrolytic condensation reaction or thermal decomposition, and in which the hydrophobized metal oxide fine particles (C) adhere to the surface of the spherical fine particles present on the upper side of the inner layer.

The substrate is preferably a substrate made of glass, metal, ceramics or a combination thereof (a composite material, a laminated material, etc.), particularly preferably a transparent substrate made of glass. The substrate preferably has reactive groups on its surface. As the reactive groups, hydroxyl groups are preferred. The surface of the substrate is preferably polished with a polishing agent made of e.g. cerium oxide or degreased by means of e.g. cleaning with an alcohol. Otherwise, oxygen plasma treatment, corona discharge treatment or ozone treatment may, for example, be applied.

The shape of the substrate may be a flat plate, or may entirely or partially have a curvature. The thickness of the substrate is suitably selected depending upon the particular application and is usually preferably from 1 to 10 mm.

The water-repellent article of the present invention may have the water-repellent layer comprising the inner layer and the surface layer, on each side of the substrate, or may have the water-repellent layer comprising the inner layer and the surface layer, on one side of the substrate. Selection may suitably be made depending upon the particularly application, etc. For example, when the water-repellent article of the present invention is to be used for window glass for buildings or for window glass for transport machines such as automobiles, it is preferably a glass plate having the water-repellent layer comprising the inner layer and the surface layer, on one side of the substrate.

The metal oxide spherical fine particles (A) to be used for forming the inner layer have a mean primary particle size of from 1 to 60 nm, preferably from 15 to 50 nm, particularly preferably from 30 to 50 nm. The metal oxide spherical fine particles (B) have a mean primary particle size of from 50 to 300 nm, preferably from 60 to 200 nm, particularly preferably from 70 to 100 nm. Further, the difference in the mean primary particle size between them is at least 20 nm, preferably from 30 to 60 nm.

These metal oxide spherical fine particles preferably have an aspect ratio within a range of from 1:1 to 1:1.5. Further, these metal oxide spherical fine particles are such that the proportion of the metal oxide spherical fine particles (A) to the total of the metal oxide spherical fine particles (A) and the metal oxide spherical fine particles (B) is more than 30 mass% and at most 60 mass%, preferably more than 30 mass% and at most 50 mass%.

In order to form an inner layer excellent in abrasion resistance, it is preferred that the metal oxide fine particles are packed as densely as possible. When the metal oxide spherical fine particles (A) and the metal oxide spherical fine particles (B) satisfy the above condition for the particle size and the above condition for the proportion, the particles are considered to be densely packed to increase the mechanical strength. Further, it is considered that the contact points of the particles with one another will increase as the particles are densely packed. As described hereinafter, it is preferred that the inner layer is formed by applying, on the surface of the substrate, a dispersion comprising the metal oxide spherical fine particles (A), the metal oxide spherical fine particles (B) and a dispersing medium and containing substantially no binder material, and removing the dispersing medium to form a layer of a mixture of the spherical fine particles, followed by heating at a temperature of from 300 to 800°C to sinter the spherical fine particles. Accordingly, when contact points of.spherical fine particles with one another will increase, fixing points will increase, whereby sintering tends to readily proceed, which is also considered to be effective for the development of the abrasion resistance.

As a combination of the metal oxide spherical fine particles (A) and the metal oxide spherical fine particles (B), a case may, for example, be mentioned wherein as the metal oxide spherical fine particles (A), metal oxide fine particles having a mean primary particle size of 45 nm are used, and as the metal oxide spherical fine particles (B), metal oxide fine particles having a mean primary particle size of 85 nm are used. In this case, the difference in the mean primary particle size between the two is 40 nm.

Here, the value of the mean primary particle size in the present invention is a value by a BET method. Further, the metal oxide spherical fine particles used in the present invention have a uniform particle size and exhibit a sharp particle size distribution. The particle size distribution is obtained by photographing a TEM image of metal oxide spherical fine particles, visually measuring the size and number of particles from the image, followed by data treatment.

The metal oxide spherical fine particles (A) and the metal oxide spherical fine particles (B) are, respectively, preferably spherical fine particles of at least one metal oxide selected from the group consisting of SiO₂, Al₂O₃, TiO₂, SnO₂, ZrO₂ and CeO₃. The metal oxide spherical fine particles (A) and the metal oxide spherical fine particles (B) may be made of different metal oxides or may be made of the same metal oxide, the latter being preferred. In the present invention, it is particularly preferred that both the metal oxide spherical fine particles (A) and the metal oxide spherical fine particles (B) are spherical fine particles made of SiO₂. Such metal oxide spherical fine particles (A) and (B) may be an anhydride or a hydrate. Further, such metal oxide spherical fine particles are preferably used in the form of a sol.

The hydrophobized metal oxide fine particles (C) to form the surface layer, are fine particles obtainable by treating the surface of the metal oxide fine particles with a hydrophobizing agent, and their surface has hydrophobicity.

The shape of the metal oxide fine particles before subjected to hydrophobizing treatment (which may hereinafter referred to also as metal oxide fine particles (E)) may be any one of a spherical shape, a chain shape, a plate shape or a needle shape, and in the present invention, it is preferably a spherical shape.

The mean primary particle size of the metal oxide fine particles (E) is from 1 to 20 nm, preferably from 3 to 15 nm, particularly preferably from 5 to 10 nm. When the mean primary particle size is within the above range, there is a merit such that after being hydrophobized, the fine particles tend to have a higher force for agglomeration to one another thereby to form a concave-convex shape to provide water-repellency performance.

Further, the mean primary particle size of the metal oxide fine particles (E) is usually preferably smaller than the mean primary particle size of the metal oxide spherical fine particles (A). The inner layer formed by the metal oxide spherical fine particles (A) and the metal oxide spherical fine particles (B) not only has a concave-convex structure on its surface but also has spaces in the interior of the layer. The water-repellent article of the present invention has the hydrophobized metal oxide fine particles (C) deposited at least on the surface of the inner layer and further may have the hydrophobized metal oxide fine particles deposited also in the above-mentioned spaces. It is preferred that the hydrophobized metal oxide fine particles (C) are deposited not only on the surface of the inner layer but also in the spaces, since the water-repellency can thereby be maintained even if the surface of the water-repellent article is damaged by e.g. abrasion, as the hydrophobized metal oxide fine particles (C) are present also in the inner layer. It is preferred that the mean primary particle size of the hydrophobized metal oxide fine particles (C) is smaller than the mean primary particle size of the metal oxide spherical fine particles (A), since the water-repellency can thereby be maintained for a long period of time, as the hydrophobized metal oxide fine particles (C) can be penetrated into the inner layer.

The metal oxide fine particles (E) are preferably fine particles made of a material similar to the metal oxide spherical fine particles (A) and the metal oxide spherical fine particles (B), particularly preferably fine particles made of SiO₂, especially preferably spherical fine particles made of SiO₂.

As the hydrophobizing agent, various materials may be used. It may, for example, be (i) a compound having a metal atom to which a hydrophobic organic group and a hydrolyzable group are bonded, (ii) a compound having a metal atom to which a hydrophobic organic group and a polymerizable functional group are bonded, or (iii) a compound having a metal atom to which a hydrophobic organic group and a functional group such as an epoxy group or an amino group are bonded directly or indirectly, and (i) is preferred. Here, the metal atom in such a hydrophobizing agent, may, for example, be a silicon atom, an aluminum atom, a titanium atom, a tin atom or a cerium atom, and a silicon atom is preferred.

The hydrophobic organic group in the above (i) is preferably a monovalent hydrophobic organic group. Specifically, a monovalent hydrocarbon group or a monovalent fluorinated hydrocarbon group is preferred. As the monovalent hydrocarbon group, a C₁₋₂₀ (preferably C₁₋₁₀) alkyl group or a C₂₋₆ alkenyl group is preferred. The C₁₋₂₀ alkyl group may, for example, be a methyl group, an ethyl group, an isopropyl group, a t-butyl group, a n-hexyl group, a n-heptyl group, a n-octyl group, a n-nonyl group or a n-decyl group, and a methyl group, an ethyl group or an isopropyl group is preferred. The C₂₋₆ alkenyl group is preferably a linear alkenyl group, and the number of carbon atoms is preferably from 2 to 4. Specifically, a vinyl group, an allyl group or a butenyl group may, for example, be mentioned, and a vinyl group or an allyl group is preferred.

The monovalent fluorinated hydrocarbon group is a group having at least one hydrogen atom contained in the above-mentioned monovalent hydrocarbon group substituted by a fluorine atom, preferably a group having at least two hydrogen atoms substituted by fluorine atoms. Particularly preferred is a C₁₋₂₀ polyfluoroalkyl group.

Such a polyfluoroalkyl group is preferably a group having at least two among hydrogen atoms bonded to carbon atoms in the corresponding alkyl group substituted by fluorine atoms, particularly preferably a perfluoroalkyl group having all of such hydrogen atoms substituted by fluorine atoms. Further, a group represented by the following formula (3) is also particularly preferred. Further, the number of carbon atoms in such a group is preferably from 1 to 10.

F(CF₂)ₚ(CH₂)_{q}- (3)

In the above formula, p is an integer of from 1 to 8, q is an integer of from 2 to 4, p+q is from 2 to 12, preferably from 6 to 11. p is preferably an integer of from 1 to 8. q is preferably 2 or 3.

The perfluoroalkyl group is preferably CF₃-, F(CF₂)₂-, F(CF₂)₃- or F(CF₂)₄-. The group represented by the formula (3) is preferably F(CF₂)₈(CH₂)₂-, F(CF₂)₈(CH₂)₃-, F(CF₂)₆(CH₂)₂-, F(CF₂)₆(CH₂)₃-, F(CF₂)₄(CH₂)₂- or F(CF₂)₄(CH₂)₃-.

The hydrolyzable group may, for example, be an alkoxy group, an isocyanate group, an acyloxy group or a halogen atom. The alkoxy group is preferably a methoxy group, an ethoxy group or an isopropoxy group. The acyloxy group is preferably an acetyloxy group. The halogen atom is preferably a chlorine atom. The hydrolyzable group is preferably a chlorine atom or an alkoxy group.

The compound (i) having a metal atom to which a hydrophobic organic group and a hydrolyzable group are bonded, is preferably a hydrolyzable silicon compound having a silicon atom to which a hydrophobic organic group and a hydrolyzable group are bonded, or a partially hydrolyzed condensate of such a silicon compound. Specifically, it is preferably at least one hydrolyzable silicon compound selected from the group consisting of a compound of the following formula (C-1) and a compound of the following formula (C-2), or a partially hydrolyzed condensate of such a hydrolyzable silicon compound.

R^{a}-Si(R)ₕ(X¹)₍₃₋ₕ₎ (C-1)

R^{f}-Si(R)ⱼ(X²)₍₃₋ⱼ₎ (C-2)

provided that the symbols in the formulae have the following meanings:
R^{a}: a C₁₋₂₀ alkyl group, or a C₂₋₆ alkenyl group,
R^{f}: a C₁₋₂₀ polyfluoroalkyl group,
R: an alkyl group having at most 6 carbon atoms, or a C₂₋₆ alkenyl group,
X¹ and X²: each independently a halogen atom, a C₁₋₆ alkoxy group, a C₁₋₆ acyloxy group or an isocyanate group,
h and j: each independently 0, 1 or 2.
R^{a} is the same as the above-mentioned C₁₋₂₀ alkyl group or a C₂₋₆ alkenyl group, and its preferred embodiments are also the same. R^{f} is the same as the above-mentioned C₁₋₂₀ polyfluoroalkyl group, and its preferred embodiments are also the same.
R is an alkyl group having at most 6 carbon atoms, or a C₂₋₆ alkenyl group. The alkyl group having at most 6 carbon atoms is preferably a linear alkyl group, and the number of carbon atoms is preferably from 1 to 4. Specifically, a methyl group, an ethyl group or a n-propyl group may, for example, be mentioned, and a methyl group or an ethyl group is preferred. The C₂₋₆ alkenyl group is the same as described above.
When X¹ or X² being a hydrolyzable group is a halogen atom, it is preferably a chlorine atom. The C₁₋₆ alkoxy group is preferably a methoxy group, an ethoxy group or an isopropoxy group, and the C₁₋₆ acyloxy group is preferably an acetyloxy group or a propionyloxy group. Each of X¹ and X² which are independent of each other, is preferably a chlorine atom, the above-mentioned alkoxy group or an isocyanate group.

Specifically, the hydrophobizing agent is preferably dimethyldichlorosilane, dimethyldiethoxysilane, methyltrimethoxysilane or trimethylethoxysilane.

With respect to the method for hydrophobizing treatment, in the case of the above (i), the treatment can be carried out by adding a hydrophobizing agent to a sol of metal oxide fine particles (E), followed by stirring. In the cases of the above (ii) and (iii), the treatment can be carried out by adding a hydrophobizing agent after preliminarily treating the surface of the metal oxide fine particles (E) with a silane coupling agent, followed by stirring. In either case, heating may be carried out as the case requires.

In the hydrophobized metal oxide fine particles (C), the covered proportion of the surface of the metal oxide fine particles (the proportion of the hydrophobized surface in the total surface area of the metal oxide fine particles) is preferably from 30 to 90%, particularly preferably from 40 to 70%.

The hydrophobized metal oxide fine particles (C) are preferably fine particles having at least one group selected from a methyl group, an ethyl group, an isopropyl group, the above-mentioned group represented by the formula (3) and the above-mentioned perfluoroalkyl group bonded to the surface of spherical fine particles made of SiO₂.

The surface layer further contains a metal oxide binder. The metal oxide binder is a component formed by a binder material containing a metal compound (D) (which may hereinafter also referred to simply as "metal compound (D)") which becomes a metal oxide by a hydrolytic condensation reaction or thermal decomposition. The metal compound (D) is preferably a hydrolyzable metal compound having a hydrolyzable group bonded thereto, a partially hydrolyzed condensate of such a hydrolyzable metal compound, or a metal-coordinated compound having a ligand coordinated thereto. The hydrolyzable metal compound becomes a metal oxide by a hydrolytic condensation reaction, and the metal coordinated compound becomes a metal oxide by thermal decomposition in the presence of oxygen. The metal atom is preferably at least one metal atom selected from the group consisting of a silicon atom, an aluminum atom, a titanium atom, a tin atom and a cerium atom, and particularly preferred is a silicon atom.

The hydrolyzable group may, for example, be an alkoxy group, an isocyanate group or a halogen atom, and an alkoxy group is preferred. With the alkoxy group, the hydrolytic reaction or the condensation reaction proceeds mildly. Further, the hydrolytically condensable metal compound (D) having an alkoxy group as the hydrolyzable group has a merit in that it disperses without agglomeration, and it can adequately function as a binder for individual hydrophobized metal oxide fine particles (C). The alkoxy group may, for example, be a methoxy group, an ethoxy group or an isopropoxy group. The ligand may, for example, be acetylacetate, acetylacetone, ethylacetoacetate, lactate or octylene glycolate.

In the metal compound (D), it is preferred that at least two hydrolyzable groups are bonded to a metal atom, or at least two ligands are coordinated to a metal atom. In a case where at least two hydrolyzable groups are bonded (or coordinated), when the compound is fired and converted to a metal oxide binder, it will be a strong binder.

To the metal atom in the hydrolytically condensable metal compound (D), a group other than the hydrolyzable group may be bonded. The group other than the hydrolyzable group may be a monovalent organic group. Such a monovalent organic group may, for example, be an alkyl group; an alkyl group having a functional group such as a fluorine atom, a chlorine atom, an epoxy group, an amino group, an acyloxy group or a mercapto group; or an alkenyl group, and specifically, the same group as the after-mentioned R^{f}, R^{a}, R^{b} or R is preferred.

The hydrolytically condensable metal compound (D) is preferably a hydrolyzable silicon compound having a silicon atom to which a hydrolyzable group is bonded, or a partially hydrolyzed condensate of such a silicon compound. Specifically, it is preferably at least one hydrolyzable silicon compound selected from the group consisting of a compound of the following formula (D-1), a compound of the following formula (D-2), a compound of the following formula (D-3) and a compound of the following formula (D-4), or a partially hydrolyzed condensate of such a hydrolyzable silicon compound.

R^{a}-Si(R)ₘ(X²)₍₃₋ₘ₎ (D-1)

R^{f}-Si(R)ₖ(X¹)₍₃₋ₖ₎ (D-2)

R^{b}-Si-(R)ₙ(X³)₍₃₋ₙ₎ (D-3)

S₁-(X⁴)₄ (D-4)

provided that the symbols in the formulae have the following meanings:
R^{a}: a C₁₋₂₀ alkyl group or a C₂₋₆ alkenyl group,
R^{f}: a C₁₋₂₀ polyfluoroalkyl group,
R^{b}: an organic group having at most 10 carbon atoms and having a functional group selected from an epoxy group, an amino group, an acyloxy group, a mercapto group and a chlorine atom,
R: an alkyl group having at most 6 carbon atoms, or a C₂₋₆ alkenyl group,
X¹, X², X³ and X⁴: each independently a halogen atom, a C₁₋₆ alkoxy group, a C₁₋₆ acyloxy group, or an isocyanate group,
k, m and n: each independently 0 or 1.

The above R^{f}, R^{a}, R, X¹ and X² are the same groups as the above-mentioned groups, and their preferred embodiments are also the same. X³ and X⁴ are the same hydrolyzable groups as X¹ and X², and their preferred embodiments are also the same.

R^{b} is an organic group having at most 10 carbon atoms, which has a functional group selected from an epoxy group, an amino group, an acyloxy group, a mercapto group and a chlorine atom. The functional group is preferably an epoxy group, an amino group or an acyloxy group. Further, when the functional group is an acyloxy group, it is preferably an acetoxy group, a propionyloxy group or a butyryloxy group. Here, "at most 10 carbon atoms" does not include the number of carbon atoms contained in the functional group.

Each of k, m and n which are independent of one another, is 0 to 1. Each of k, m and n is preferably 0. When each of k, m and n is 0, each of the hydrolyzable metal compounds (D-1) to (D-4) has three hydrolyzable groups, and the metal compound itself, or the metal compound and the inner layer surface can be firmly bonded, such being desirable.

The compound of the formula (D-1) may, for example, be methyltriethoxysilane, methyltrimethoxysilane, ethyltriethoxysilane, dimethyldiethoxysilane, dimethyldimethoxysilane, ethenyltrimethoxysilane, propenyltrimethoxysilane, n-heptyltrimethoxysilane, n-heptyltriethoxysilane, n-octyltrimethoxysilane or n-octyltriethoxysilane.

The compound of the formula (D-2) may, for example, be (3,3,3-trifluoropropyl)trimethoxysilane, (3,3,3-trifluoropropyl)methyldimethoxysilane, (1,1,1-trifluoromethyl)trimethoxysilane, (1,1,1-trifluoromethyl)methyldimethoxysilane, 3-(heptafluoroethyl)propyltrimethoxysilane, 3-(nonafluorohexyl)propyltrimethoxysilane, 3-(nonafluorohexyl)propyltriethoxysilane, 3-(tridecafluorooctyl)propyltrimethoxysilane, 3-(tridecafluorooctyl)propyltriethoxysilane or 3-(heptadecafluorodecyl)propyltrimethoxysilane.

The compound of the formula (D-3) may, for example, be 3-glycidoxypropyltrimethoxysilane, 3-glycidoxypropylmethyldimethoxysilane, 3-aminopropyltrimethoxysilane, N-(2-aminoethyl)-3-aminopropyltrimethoxysilane or acetoxymethyltrimethoxysilane.

The compound of the formula (D-4) may, for example, be tetraethoxysilane, tetramethoxysilane, tetraisopropoxysilane, tetraisocyanatesiiane or tetrachlorosilane.

Among the compounds of the above formulae (D-1) to (D-4), preferred is the compound of the formula (D-4) or the partially hydrolyzed condensate of such compound (D-4). More specifically, tetraethoxysilane, a partially hydrolyzed condensate of tetraethoxysilane, tetramethoxysilane or a partially hydrolyzed condensate of tetramethoxysilane, is preferred.

Further, as the metal compound (D) having a hydrolyzable group, tetraisopropoxytitanium, tetrabutoxytitanium, triisopropoxyaluminum, tetrabutoxyzirconium or tetrapropoxyzirconium may also be suitably used.

In a case where the metal compound (D) is a metal-coordinated compound, such a compound may, for example, be aluminum tris(acetylacetate), aluminum (ethylacetoacetate)diisopropoxide, aluminum tris(ethylacetoacetate), titanium bis(acetylacetate)diisopropoxide, titanium tetra(acetylacetate), titanium bis(octylene glycolate)dibutoxide, titanium bis(lactate)dihydroxide, titanium bis(triethanolaminolate), titanium bis(ethylacetoacetate)diisopropoxide, polyhydroxy titanium stearate, zirconium (tetraacetylacetate), zirconium (acetylacetate)tributoxide, zirconium bis(acetylacetate)dibutoxide or zirconium (acetylacetate)(ethylacetoacetate)dibutoxide, and preferred is aluminum tris(acetylacetate).

Further, in a case where the metal compound (D) is a compound containing fluorine atoms, there is a merit such that the durability such as chemical resistance or abrasion resistance is high.

The water repellent article of the present invention is preferably prepared by forming a layer of a mixture comprising the metal oxide spherical fine particles (A) and the metal oxide spherical fine particles (B), on a surface of a substrate, then sintering these spherical fine particles to form the inner layer having a concave-convex surface, then forming, on the surface of the inner layer, a coating film comprising the above-mentioned hydrophobized metal oxide fine particles (C) and a binder material containing the above-mentioned metal compound (D), followed by firing to form a surface layer having a concave-convex surface.

The inner layer is preferably formed by applying, on the surface of the substrate, a dispersion (which will be hereinafter referred to as the dispersion (1)) comprising the metal oxide spherical fine particles (A), the metal oxide spherical fine particles (B) and a dispersing medium and containing substantially no binder material, and removing the dispersing medium to form a layer of the mixture of the spherical fine particles, followed by heating to sinter the spherical fine particles.

As the dispersing medium, water or an alcohol may, for example, be used. The alcohol may, for example, be methanol, ethanol or isopropylalcohol, and isopropylalcohol is preferred. These dispersing media may be used alone or in combination as a mixture of two or more of them. In a case where the metal oxide spherical fine particles (A) or the metal oxide spherical fine particles (B) are available and used in a state containing a solvent (such as a liquid having a sol dispersed in a medium), such a medium may also be used as a dispersing medium for the dispersion to form the inner layer.

The amount of the dispersing medium is preferably from 10 to 50 times, particularly preferably from 15 to 40 times, to all metal oxide spherical fine particles contained in the dispersion. The solid content concentration in the dispersion is preferably from 2 to 10 mass%, particularly preferably from 3 to 7 mass%.

The dispersion (1) may, for example, be prepared by mixing a sol A (a mixture of metal oxide spherical fine particles (A) and a dispersing medium) and a sol B (a mixture of metal oxide spherical fine particles (B) and a dispersing medium) at room temperature.

The dispersion (1) contains substantially no binder material. Here, the binder material means a component which can be converted to a metal oxide binder by a hydrolytic condensation reaction or thermal decomposition, such as a metal alkoxide or a metal-coordinated compound, and it is the same component as the above-mentioned metal compound (D). Further, the dispersion (1) may contain a dispersant.

The method for applying the dispersion (1) on the surface of the substrate may, for example, be a dip coating method, a flow coating method, a spin coating method, a spray coating method, a die coating method, a roller coating method or a flexo coating method, and it is preferred to employ a flow coating method, a spray coating method or a die coating method. The removal of the dispersing medium is preferably carried out by drying at a temperature of from 100 to 300°C after the application of the dispersion (1) on the substrate. By the removal of the dispersing medium, a layer of a mixture comprising the metal oxide spherical fine particles (A) and the metal oxide spherical fine particles (B) will be formed. The thickness of the layer of such a mixture is preferably from 100 to 500 nm.

Then, in the substrate having the layer of the mixture formed thereon, the spherical fine particles are sintered. The heating temperature for the sintering is preferably from 300 to 800°C, particularly preferably from 500 to 700°C. By heating within the above temperature range, the surface of the metal oxide spherical fine particles (A) having small particle sizes will be partially fused, whereby the metal oxide spherical fine particles (B) and the metal oxide spherical fine particles (A), the metal oxide spherical fine particles (A) one another, and further, the substrate surface and the metal oxide spherical fine particles (A) are considered to be firmly fixed, such being effective for development of the durability. Further, it is also considered that a dehydration condensation reaction of silanol groups one another will proceed on the surface of the metal oxide spherical fine particles (A) or (B) or on the substrate surface, which is also considered to contribute to the development of the durability. Here, at the time of forming the inner layer, the drying and the sintering may be carried out continuously without dividing the process into separate steps.

The inner layer prepared as described above has a layer thickness of at most 5 times (preferably from 2 to 3 times) the mean primary particle size of the metal oxide spherical fine particles (B). With such a thickness, the water-repellent article of the present invention is capable of maintaining the transparency (making the haze value small) and securing good visibility.

Here, the thickness of the inner layer is the length of a line vertically connecting the substrate surface and the highest point from the substrate in a cross sectional photograph of the substrate having the inner layer formed thereon, as photographed by a scanning electron microscope.

In a case where the substrate is a glass plate, the sintering temperature may be a temperature lower than the softening point of the glass plate or a temperature of at least the softening point. The softening point of the glass plate is usually from 500 to 700°C, although it may depend upon the composition of the glass plate.

Window glass for a transport machine may have a curvature imparted for a reason in designing or may be reinforced for a safety reason. In a case where the glass plate is processed to have a curvature, it is common to carry out bending by its own weight or bending by a press, while heating the glass plate at a temperature of at least its softening point. In a case where the water-repellent article of the present invention is applied to window glass for a transport machine, it is preferred to carry out the above bending at the same time as sintering. Namely, it is preferred to subject the glass plate to bending at the same time as forming the inner layer by sintering at a temperature of at least the softening point of the glass plate. It is also possible that after forming the inner layer and carrying out the bending, quenching is carried out for reinforcement treatment.

Whereas, in a case where after the inner layer is formed, it is desired to cut the glass plate into a desired shape or to carry out processing such as chamfering the cut surface, if the reinforcing treatment is done, such processing tends to be difficult. Accordingly, in such a case, it is preferred to carry out sintering at a temperature of lower than the softening point of the glass plate to avoid reinforcing treatment.

Further, the sintering may be carried out by heating only once or may be carried out by heating a plurality of times. In the latter case, for example, after forming a layer of a mixture of the above metal oxide spherical fine particles (A) and the above metal oxide spherical fine particles (B), the glass plate is heated at a temperature of lower than the softening point of the glass plate and then cooled, followed by carrying out the processing (cutting, chamfering, etc.) of the glass plate at room temperature, and thereafter, the glass plate is heated at a temperature of at least the softening point of the glass plate to form the inner layer. In such a case, at the time of heating at the temperature of at least the softening point of the glass plate, the glass plate may be subjected to bending.

The surface of the inner layer formed on the substrate has a concave-convex shape. The shape is such that (a) the surfaced area ratio (S ratio) is from 1.01 to 1.50, (b) the average surface roughness (Ra) is from 3 to 90 nm, (c) the root-mean-square surface roughness (RMS) is from 3 to 100 nm, (d) the absolute value of the difference between the average surface roughness (Ra) and the root-mean-square surface roughness (RMS) is at most 20 nm, and (e) the maximum peak-valley difference (P-V) is from 40 to 600 nm.

In the present invention, the surface shape such as the surfaced area ratio (S ratio) is a three dimensional shape and is a value obtainable by an analysis and calculation by means of a dedicated software based on the data measured by a scanning electron microscope. Specific measuring conditions and analytical method will be described in Examples.

The inner layer is formed by the metal oxide fine particles which are regularly packed. Accordingly, the absolute value of the difference between the average surface roughness (Ra) and the root-mean-square surface roughness (RMS) usually takes a small value and specifically becomes at most 20 nm (preferably from 1 to 20 nm).

The surface layer is preferably formed by applying, on the surface of the inner layer of the substrate having the inner layer formed thereon, a dispersion comprising the hydrophobized metal oxide spherical fine particles (C), the metal compound (D) and a solvent for the metal compound (D), and removing the solvent to form a layer comprising the fine particles (C) and the metal compound (D), followed by heating to convert the metal compound (D) to a metal oxide binder. In the present invention, the thickness of the surface layer is preferably from 3 to 60 nm. Further, the surface layer may not necessarily cover the entire surface of the inner layer, and the upper side of the inner layer may partially be exposed.

The hydrophobized metal oxide fine particles (C) adhere to the surface of the spherical fine particles present on the upper side of the inner layer. Here, "adhere" may be bonding by a chemical bond between silanol groups (-SiOH) remaining on the surface of the hydrophobized metal oxide fine particles (C) and silanol groups remaining on the surface of the spherical fine particles on the upper side of the inner layer, or the surface of the hydrophobized metal oxide fine particles (C) and the surface of the spherical fine particles on the upper side of the inner layer are partially fused by heating so that the two are bonded by the fusion.

Here, the hydrophobized metal oxide fine particles (C) adhere at least to the upper side of the inner layer, and they may adhere also to portions (portions other than the upper side) such as recessed portions or spaces in the inner layer formed by the metal oxide spherical fine particles (A) and the metal oxide spherical fine particles (B). In a case where the hydrophobized metal oxide fine particles (C) adhere not only on the upper side of the inner layer but also at portions such as recessed portions or spaces in the inner layer, even if the water repellency on the surface of the water-repellent article is lowered by abrasion during the use, the water repellency can be maintained by the hydrophobized metal oxide fine particles (C) present at the portions such as recessed portions or spaces in the inner layer, such being desirable.

The dispersion (which will be hereinafter referred to as the dispersion (2)) containing the hydrophobized metal oxide fine particles (C) and the metal compound (D), contains the solvent for the above (D), a catalyst (an acid such as hydrochloric acid or nitric acid, or an aqueous solution of such an acid) for a hydrolytic condensation reaction, etc., in addition to the above hydrophobized metal oxide spherical fine particles (C) and the metal compound (D). As the solvent, the same solvent as the solvent contained in the dispersion (1) to form the inner layer may be used, and its preferred embodiments are also the same.

To the dispersion (2), other components may be added as the case requires. As such other components, silicone, a leveling agent and a dispersant may, for example, be mentioned. When silicone is contained in the dispersion (2), the coefficients of static friction and dynamic friction of the obtainable water-repellent article tend to be small, such being effective for maintaining the concave-convex shape. The silicone may, for example, be carbinol-modified silicone (such as product No.: KF6001, manufactured by Shin-Etsu Chemical Co., Ltd.), amino-modified silicone or epoxy-modified silicone.

As the method for applying the dispersion (2) on the surface of the inner layer, the same method as the method for applying the above-mentioned dispersion (1) on the surface of the substrate may be mentioned, and a flow coating method, a spray coating method or a die coating method is preferred.

The substrate after the application of the dispersion (2), is subjected to heating to carry out drying of the solvent and formation of a metal oxide binder. The drying temperature is usually from 50 to 200°C, preferably from 100 to 200°C. The temperature required for formation of a metal oxide binder is from 200 to 400°C, preferably from 250 to 350°C. By heating at such temperature, the metal compound (D) undergoes a hydrolytic condensation reaction or thermal decomposition and is converted to a metal oxide binder. Here, also in the formation of the surface layer, the drying and formation of the binder may continuously be carried out.

The water-repellent article of the present invention obtained as described above has roughness on its surface, and the surface of the water-repellent layer has (a) a surface area ratio (S ratio) of from 1.01 to 1.40 (preferably from 1.05 to 1.35), (b) an average surface roughness (Ra) of from 3 to 80 nm (preferably from 30 to 70 nm), (c) a root-mean-square surface roughness (RMS) of from 3 to 90 nm (preferably from 30 to 80 nm), (d) an absolute value of the difference between the average surface roughness (Ra) and the root-mean-square surface roughness (RMS) of at most 20 nm. (preferably from 1 to 15 nm) and (e) a maximum peak-valley difference (P-V) of from 40 to 600 nm (preferably from 300 to 500 nm).

As mentioned above, the inner layer is formed by the metal oxide spherical fine particles which are regularly packed. And, the surface layer formed on the surface of the inner layer contains the hydrophobized metal oxide fine particles (C). Accordingly, (d) the absolute value of the difference between the average surface roughness (Ra) and the root-mean-square surface roughness (RMS) of the surface of the inner layer (hereinafter referred to as the value (d)) and the value (d) of the surface layer have a certain difference due to the hydrophobized metal oxide fine particles (C). While the value (d) of the surface of the inner layer is at most 20 nm, the value (d) of the surface layer is from 1 to 20 nm, preferably from 1 to 15 nm.

Further, the pitch of the surface roughness of the water-repellent layer of the water-repellent article of the present invention is preferably from 0.5 to 5.0 µm. Here, the pitch is a value calculated from the average cross sectional profile of the entire surface measured by an atomic force microscope.

The water-repellent article of the present invention has the above described surface shape, whereby it is able to exhibit excellent water repellency and yet is excellent in abrasion resistance. That is, as shown by the above (a) and (e), the surface is concave-convex, whereby the water repellency is enhanced as compared with a flat surface. Besides, as shown by the above (b), (c) and (d), the surface is relatively regularly concave-convex without any substantial local difference in the height of irregularities, whereby the surface can be made less susceptible to damages by abrasion with a wiper, cloth, etc. Further, it is considered that by an synergistic effect with a characteristic such that the metal oxide spherical fine particles are regularly packed or with a characteristic such that fixing points at which the particles are sintered and fixed to one another, are many, good abrasion resistance can be realized.

The water repellent article of the present invention exhibits excellent water repellency and is excellent also in abrasion resistance. Accordingly, it is useful for window glass for transport machines (such as automobiles, trains, ships or airplanes) and useful particularly for window glass for automobiles. The window glass for automobiles may be a laminated glass or a tempered glass. In a case where the water-repellent article of the present invention is used for a laminated glass, it is preferred to employ a method wherein the water-repellent article produced by the above-described method, an interlayer film and another substrate are overlaid in this order, followed by press bonding.

Further, in a case where the water-repellent article of the present invention is used for window glass for transport machines, the article is preferably transparent. Specifically, the haze value is preferably at most 10%, more preferably at most 5%.

Further, the water-repellent article of the present invention may be applied not only to window glass for transport machines but also to window glass for buildings.

### EXAMPLES

Now, the present invention will be described in further detail with reference to Examples, but it should be understood that the present invention is by no means restricted to such Examples.

### EXAMPLE 1

The materials used in Example 1 are as follows.

As the metal oxide spherical fine particles (A), silica sol dispersion A (product No.: IPA-ST-L, manufactured by Nissan Chemical Industries, Ltd., average primary particle size: 45 nm) was used.

As the metal oxide spherical fine particles (B), silica sol dispersion B (product No.: IPA-ST-ZL, manufactured by Nissan Chemical Industries, Ltd., average primary particle size: 85 nm) was used.

As the hydrophobized metal oxide fine particles (C), hydrophobized silica fine particles C (tradename: AEROSIL R972, manufactured by Nippon Aerosil Co., Ltd., average primary particle size: 16 nm) were used.

As the metal compound (D), tetraethoxysilane was used.

Data of the particle size distributions of the metal oxide fine particles (A) and the metal oxide fine particles (B) used in this Example are shown below. These data are ones obtained by photographing TEM images of these fine particles and visually measuring the particle sizes and the number of particles from the images.

**TABLE 1**

| Metal oxide spherical | Primary particle size (nm) | 20 | 30 | 40 | 50 | 60 | 70 | 80 |
|---|---|---|---|---|---|---|---|---|
| fine particles (A) | Number of particles | 1 | 25 | 92 | 71 | 31 | 10 | 5 |

**TABLE 2**

| Metal oxide spherical | Primary particle size (nm) | 95 | 100 | 105 | 110 | 115 |
|---|---|---|---|---|---|---|
| fine particles (B) | Number of particles | 7 | 29 | 72 | 26 | 2 |

### (1) PREPARATION OF COATING FLUID FOR INNER LAYER

Into a glass container having a stirrer and a thermometer set, isopropyl alcohol (25.84 g), silica sol dispersion (A) (1.68 g, solid content: 0.515 g) and silica sol dispersion (B) (3.38 g, solid content: 1.03 g) were put and stirred at 25°C for 10 minutes to obtain a coating fluid 1 for inner layer. The blend ratios of the respective components are shown in Table 3. The proportion of the metal oxide spherical fine particles (A) to the total of the metal oxide spherical fine particles (A) and the metal oxide spherical fine particles (B) was 33 mass%.

### (2) PREPARATION OF COATING FLUID FOR SURFACE LAYER

Into a glass container having a stirrer and a thermometer set, isopropyl alcohol (10.73 g), hydrophobized silica fine particles C (0.2 g), carbinol-modified silicone (product No.: KF6001, manufactured by Shin-Etsu Chemical Co., Ltd.) (0.1 g), metal oxide (D) (tetraethoxysilane) (0.07 g) and a 50% nitric acid aqueous solution (0.14 g) were put, and ultrasonic treatment (25 kHz) was carried out for two hours. The mixture was further stirred at 50°C for one hour, and isopropyl alcohol (11.24 g) was added to obtain a coating fluid 1 for surface layer.

### (3) PREPARATION OF WATER-REPELLENT ARTICLE

On the surface of a glass substrate (length: 200 mm, width: 200 mm, thickness: 3.5 mm) polished with cerium oxide, the coating fluid 1 for inner layer (8 g) prepared in (1) was dropped and applied over the entire surface of the substrate by spin coating (700 rpm, 20 seconds). Then, the coated substrate was dried for 10 minutes in an electric furnace at 300°C and then heated for 10 minutes in a muffle furnace at 650°C to form an inner layer on the surface of the glass substrate.

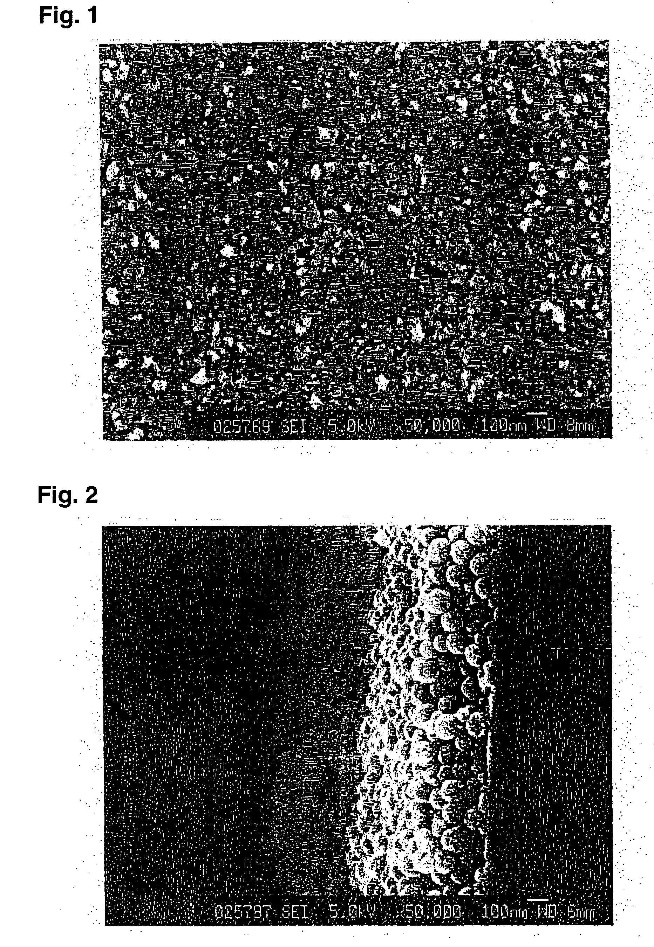

Then, on the side having the inner layer formed, the coating fluid 1 for surface layer (8 g) prepared in (2) was dropped and applied over the surface of the inner layer by spin coating (700 rpm, 20 seconds) and heated for one hour in an electric furnace at 300°C to obtain a water-repellent article 1. A photograph taken from the upper side (from the surface layer side) of the obtained water-repellent article 1 by a scanning electron microscope is shown in Fig. 1, and the cross sectional photograph is shown in Fig. 2. From the cross sectional photograph, it was confirmed that the thickness of the inner layer of the water-repellent article 1 was at most 5 times the mean primary particle size of the metal oxide spherical fine particles (B).

With respect to the obtained water-repellent article 1, the rainwater removability, the contact angle to water, the falling angle of water droplets, the haze value, the layer thickness, the abrasion resistance and the three dimensional surface shape were measured by the following evaluation methods. The results are shown in Tables 4 and 5. The water-repellent article 1 had a rainwater removability of 0.10 g, a contact angle to water of 159°, a water falling angle of 1°, a haze value of 1.1 % and a layer thickness of 350 nm, and the abrasion resistance was good.

### 1. RAINWATER REMOVABILITY

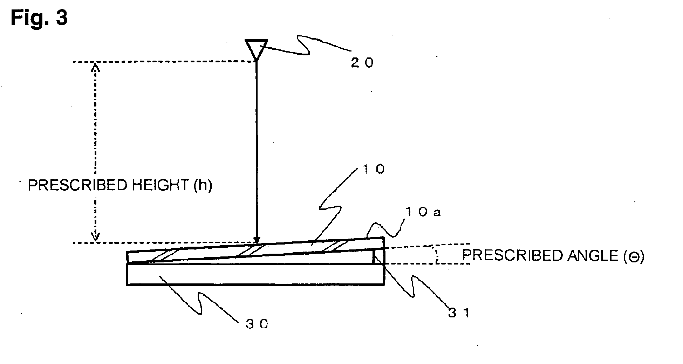

As a technique to evaluate dynamic water-repellency, the rainwater removability was evaluated by a technique shown in Fig. 3 (a technique disclosed in Japanese Patent Application No. 2005-345282 by the present applicants). Here, for the article to have the performance required for water-repellent glass for windows of transport machines, the threshold value of the remaining amount was set to be 0.2 g.

Firstly, an electronic platform weighing machine as a fixing table 30, a spacer 31 and a precision pipette as a dropping jig 20, were prepared. Then, the water-repellent article (transparent substrate 10) prepared as described above was placed on the electronic platform weighing machine so that the water-repellent layer surface (10a) was located on the upper side in a vertical direction. At that time, the spacer 31 was interposed between one end of the water-repellent article and the electronic platform weighing machine, and the water-repellent article was fixed substantially horizontally (9° to the horizontal plane). The display value of the electronic platform weighing machine at that time was set to be "0". Further, the precision pipette (Digifit AU, manufactured by SIBATA SCIENTIFIC TECHNOLOGY LTD.) was disposed at a position corresponding to the position of the center of gravity of the water-repellent article and at a prescribed height of 1,000 mm vertically above the surface of the water-repellent layer.

Then, 50 droplets of water (total: 0.75 g) each being 0.015 g, were dropped from the precision pipette on the surface of the water-repellent layer. Then, after waiting until the water droplets dropped on the surface of the water-repellent layer became a static condition, the result measured by the electronic platform weighing machine was confirmed in the static condition and found to be 0.10 g. Then, comparison was made with the threshold value (0.2 g) to judge whether or not it was qualified as a glass plate having ultra-water-repellency, and since the remaining amount in the obtained water-repellent article was 0.10 g (at most 0.2 g), the obtained water-repellent article was evaluated to satisfy the performance of the water-repellent glass for windows of transport machines.

### 2. WATER CONTACT ANGLE

2 µL of water was dropped on the surface of a water-repellent article, and the contact angle of the water droplet was measured by means of a contact angle meter (CA-X150 model, manufactured by Kyowa Interface Science Co., LTD.).

### 3. WATER FALLING ANGLE

50 µL of water was dropped on the surface of a water-repellent article, and the angle at which the water droplet started to fall, was measured by means of a falling angle meter (SA-11 model, manufactured by Kyowa Interface Science Co., LTD.) and taken as the falling angle.

### 4. HAZE VALUE

In accordance with the specification of JIS K-7105, the haze value of a water-repellent article was measured by means of a haze computer (model No.: HGM-2DP, manufactured by Suga Test Instruments Co., Ltd.).

### 5. LAYER THICKNESS

The thickness of the water-repellent surface layer of the water-repellent article was measured by means of a feeler profilometer (tradename: DEKTAK3030, manufactured by ULVAC).

### 6. ABRASION RESISTANCE

Using a reciprocating traverse tester (manufactured by KNT), a flannel cloth (cotton No. 300) was reciprocated 50 times on the surface of a water-repellent article by exerting a load of 12 N/4 cm² on the surface of the water-repellent article, whereupon the abrasion resistance was evaluated by the water contact angle. When the contact angle after the abrasion test is at least 100°, the abrasion resistance is at practically no problematic level.
ⓞ: The water contact angle was at least 100°.
○: The water contact angle was at least 80° and less than 100°.
×: The water contact angle was less than 80°.

### 7. THREE DIMENSIONAL SURFACE SHAPE

The surface shape of a water-repellent article was measured by means of a probe microscope (manufactured by SII NanoTechnology Inc., measuring head: NPX100, controller: Nanopics1000). The measurement was carried out under such conditions that the observation mode was a dumping mode, the FORCE reference was 10 mV, the scan area was 4 µm, and the scanning speed was 50 sec/frame. The analysis of the surface shape was carried out by means of a dedicated software. The average surface roughness, the root-mean-square surface roughness, the maximum peak-valley difference and the surface area ratio were calculated from the analysis of the surface roughness, and the pitch was calculated from the average cross sectional profile over the entire measured surface.

**TABLE 3**

| | | |
|---|---|---|
| Mean particle size (nm) | Metal oxide spherical fine particles (A) | 45 |
| | Metal oxide spherical fine particles (B) | 85 |
| Difference in mean particle size (nm) | | 40 |
| Proportion of (A) to the total of (A) and (B) (mass%) | | 33 |
| Layer thickness (nm) | | 350 |

**TABLE 4**

| | Example 1 |
|---|---|
| Rainwater removability (g) | 0.10 |
| Water contact angle (°) | 159 |
| Water falling angle (°) | 1 |
| Haze value (%) | 1.1 |
| Abrasion resistance | ⓞ |

**TABLE 5**

| | Example 1 |
|---|---|
| Average surface roughness Ra (nm) | 52 |
| Root-mean-square surface roughness RMS (nm) | 64 |
| RMS-Ra (nm) | 12 |
| Maximum peak-valley difference P-V (nm) | 387 |
| Surface area ratio S Ratio | 1.23 |
| Pitch (nm) | 0.5 to 3.0 |

### INDUSTRIAL APPLICABILITY

The ultra-water-repellent substrate of the present invention has excellent ultra-water repellency, and when dirt or the like is deposited on the surface, it can easily be washed off. Accordingly, it is useful for window glass for transport machines (such as automobiles, trains, ships or airplanes).

The entire disclosure of Japanese Patent Application No. 2006-338448 filed on December 15, 2006 including specification, claims, drawings and summary is incorporated herein by reference in its entirety.

## Claims

1. An article having a water-repellent surface, which is an article having a water-repellent layer comprising the following inner layer and the following surface layer, on a surface of a substrate, and which is **characterized in that** the surface of the water-repellent layer has (a) a surface area ratio (S ratio) of from 1.01 to 1.40, (b) an average surface roughness (Ra) of from 3 to 80 nm, (c) a root-mean-square surface roughness (RMS) of from 3 to 90 nm, (d) an absolute value of the difference between the average surface roughness (Ra) and the root-mean-square surface roughness (RMS) of at most 20 nm and (e) a maximum peak-valley difference (P-V) of from 40 to 600 nm:
Inner layer: A layer which is formed by sintering a mixture of metal oxide spherical fine particles (A) having a mean primary particle size of from 1 to 60 nm and metal oxide spherical fine particles (B) having a mean primary particle size of from 50 to 300 nm, provided that the difference in the mean primary particle size between the metal oxide spherical fine particles (A) and the metal oxide spherical fine particles (B) is at least 20 nm and the proportion of the metal oxide spherical fine particles (A) to the total of the metal oxide spherical fine particles (A) and the metal oxide spherical fine particles (B) is more than 30 mass% and at most 60 mass%, and which has a thickness of at most 5 times the mean primary particle size of the metal oxide spherical fine particles (B),
Surface layer: A layer which comprises hydrophobized metal oxide fine particles (C) whose mean primary particle size is from 1 to 20 nm and a metal oxide binder, provided that the metal oxide binder is made of a binder material containing a metal compound (D) which becomes a metal oxide by a hydrolytic condensation reaction or thermal decomposition, and in which the hydrophobized metal oxide fine particles (C) adhere to the surface of the spherical fine particles present on the upper side of the inner layer.

2. The article according to Claim 1, which is a glass plate having the water-repellent layer on one side thereof.

3. A process for producing an article having a water-repellent surface, **characterized by** forming a layer of a mixture comprising the following metal oxide spherical fine particles (A) and the following metal oxide spherical fine particles (B), on a surface of a substrate, then sintering these spherical fine particles to form the following inner layer having a concave-convex surface, then forming, on the surface of the inner layer, a coating film comprising the following hydrophobized metal oxide fine particles (C) and a binder material, followed by firing to form the following surface layer having a concave-convex surface:
Inner layer: A layer which is formed by sintering a mixture of metal oxide spherical fine particles (A) having a mean primary particle size of from 1 to 60 nm and metal oxide spherical fine particles (B) having a mean primary particle size of from 50 to 300 nm, provided that the difference in the mean primary particle size between the metal oxide spherical fine particles (A) and the metal oxide spherical fine particles (B) is at least 20 nm and the proportion of the metal oxide spherical fine particles (A) to the total of the metal oxide spherical fine particles (A) and the metal oxide spherical fine particles (B) is more than 30 mass% and at most 60 mass%, and which has a thickness of at most 5 times the mean primary particle size of the metal oxide spherical fine particles (B),
Surface layer: A layer which comprises hydrophobized metal oxide fine particles (C) whose mean primary particle size is from 1 to 20 nm and a metal oxide binder, provided that the metal oxide binder is a component made of a binder material containing a metal compound (D) which becomes a metal oxide by a hydrolytic condensation reaction or thermal decomposition, and in which the hydrophobized metal oxide fine particles (C) adhere to the surface of the spherical fine particles present on the upper side of the inner layer.

4. The process according to Claim 3, wherein the surface of the article having the water-repellent layer has (a) surface area ratio (S ratio) of from 1.01 to 1.40, (b) an average surface roughness (Ra) of from 3 to 80 nm, (c) a root-mean-square surface roughness (RMS) of from 3 to 90 nm, (d) an absolute value of the difference between the average surface roughness (Ra) and the root-mean-square surface roughness (RMS) of at most 20 nm and (e) a maximum peak-valley difference (P-V) of from 40 to 600 nm.

5. The process according to Claim 3 or 4, wherein the inner layer is formed by applying, on the surface of the substrate, a dispersion comprising the metal oxide spherical fine particles (A), the metal oxide spherical fine particles (B) and a dispersing medium and containing substantially no binder material, and removing the dispersing medium to form a layer of the mixture of the spherical fine particles, followed by heating at a temperature of from 300 to 800°C to sinter the spherical fine particles.

6. The process according to any one of Claims 3 to 5, wherein the metal oxide spherical fine particles (A) and the metal oxide spherical fine particles (B) are, respectively, spherical fine particles of at least one metal oxide selected from the group consisting of SiO₂, Al₂O₃, TiO₂, SnO₂, ZrO₂ and CeO₃.

7. The process according to any one of Claims 3 to 6, wherein the hydrophobized metal oxide spherical fine particles (C) are SiO₂ fine particles having their surface preliminarily hydrophobized by a hydrophobizing agent.

8. The process according to Claim 7, wherein the hydrophobizing agent is a compound having a silicon atom to which a hydrophobic organic group and a hydrolysable group are bonded.

9. The process according to any one of Claims 3 to 8, wherein the metal compound (D) is a hydrolysable silicon compound having a silicon atom to which a hydrolysable group is bonded, or a partially hydrolyzed condensate of such a silicon compound.

10. The process according to any one of Claims 3 to 9, wherein the surface layer is formed by applying, on the surface of the inner layer, a dispersion comprising the hydrophobized metal oxide fine particles (C), the metal compound (D) and a solvent for the metal compound (D), and removing the solvent to form a layer comprising the fine particles (C) and the metal compound (D), followed by heating at a temperature of from 200 to 500°C to convert the metal compound (D) to a metal oxide binder.

11. The process according to any one of Claims 3 to 10, wherein the substrate is a glass plate, and the inner layer is formed by sintering at a temperature of lower than the softening point of the glass plate.

12. The process according to any one of Claims 3 to 10, wherein the substrate is a glass plate, and the inner layer is formed by sintering at a temperature of at least the softening point of the glass plate.

13. The process according to Claim 12, wherein the inner layer is formed by sintering and at the same time subjecting the glass plate to bending at that temperature.

14. The process according to any one of Claims 3 to 13, wherein the substrate is a glass plate, and a layer of a mixture of the metal oxide fine particles (A) and the metal oxide fine particles (B) is formed, then heated at a temperature of lower than the softening point of the glass plate and then cooled, and then working of the glass plate is carried out at room temperature, followed by heating at a temperature of at least the softening point of the glass plate, to form the inner layer.

15. The process according to Claim 14, wherein the inner layer is formed by heating at a temperature of at least the softening point of the glass plate and at the same time subjecting the glass plate to bending at that temperature.

16. The process according to any one of Claims 3 to 15, wherein the metal compound (D) is at least one hydrolysable silicon compound selected from the group consisting of a compound of the following formula (D-1), a compound of the following formula (D-2), a compound of the following formula (D-3) and a compound of the following formula (D-4), or a partially hydrolyzed condensate of the hydrolysable silicon compound:
R⁸-Si(R)ₘ(X²)₍₃₋ₘ₎ (D-1)
R^{f}-Si(R)ₖ(X¹)₍₃₋ₖ₎ (D-2)
R^{b}-Si-(R)ₙ(X³)₍₃₋ₙ₎ (D-3)
Si-(X⁴)₄ (D-4)
provided that the symbols in the formulae have the following meanings:
R^{a}: a C₁₋₂₀ alkyl group or a C₂₋₆ alkenyl group,
R^{f}: a C₁₋₂₀ polyfluoroalkyl group,
R^{b}: an organic group having at most 10 carbon atoms and having a functional group selected from an epoxy group, an amino group, an acyloxy group, a mercapto group and a chlorine atom,
R: an alkyl group having at most 6 carbon atoms, or a C₂₋₆ alkenyl group,
X¹, X², X³ and X⁴: each independently a halogen atom, a C₁₋₆ alkoxy group, a C₁₋₆ acyloxy group, or an isocyanate group,
k, m and n: each independently 0 or 1.
